# EUROPEAN PATENT SPECIFICATION

(11) **EP 1 439 528 B1**
(45) Date of publication and mention of the grant of the patent: **23.12.2009**
(21) Application number: 04000732.0
(22) Date of filing: 15.01.2004
(51) Int. Cl.: G11B 5/54

(54) **Method of marking and updating optimal unlatch profile for hard disk drive**
Verfahren zur Markierung und Aktualisierung des optimalen Entriegelungsprofiles eines Festplatenlaufwerks
Méthode pour marquer et actualiser le profil optimal de déverrouillage pour disque dûr

(30) Priority: 16.01.2003 KR 2003002962
(43) Date of publication of application: 21.07.2004
(73) Proprietor: SAMSUNG ELECTRONICS CO., LTD., Suwon-si, Gyeonggi-do (KR)
(72) Inventor: Hong, Kyung-ho, Osan-si Gyeonggi-do (KR)
(74) Representative: Grünecker, Kinkeldey, Stockmair & Schwanhäusser Anwaltssozietät

(56) References cited:
- EP-A- 1 308 953
- US-A- 5 535 355
- US-A- 5 603 056
- US-A1- 2001 022 701
- US-A1- 2003 002 196
- US-A1- 2003 065 469
- US-B1- 6 523 083

## Description

### CROSS-REFERENCE TO RELATED APPLICATIONS

This application claims the benefit of Korean Patent Application No. 2003-2962, filed on January 16, 2003 in the Korean Intellectual Property Office, which is incorporated herein in its entirety by reference.

### BACKGROUND OF THE INVENTION

### Field of the Invention

The present invention relates to a hard disk drive (HDD), and more particularly, to a method for making and updating an optimal unlatch profile for a HDD. An input current to a voice coil motor (VCM) is adjusted by making an optimal unlatch profile for the characteristics of a HDD, downloading the unlatch profile to a flash ROM, and updating the unlatch profile.

### Description of the Related Art

HDDs have magnetic disks that are used to store information and are commonly used as auxiliary recording devices of computer systems. HDDs are increasingly relied on for recording and storage as they provide such benefits as high speed and high capacity.

US 5,603,056 discloses a control program for controlling an HDD and a rewrite program for rewriting the control program stored together in a flash EEPROM. Upon entering the rewrite mode, a CPU in the HDD saves the control program in the flash EEPROM into the RAM: The CPU erases the flash EEPROM and restores the rewrite program of the RAM into the EEPROM. The CPU receives a new control program from a host computer and loads it in the flash EEPROM. The erasing of the flash EEPROM and the loading of the new control program are performed by the CPU in accordance with the rewrite program saved in the RAM.

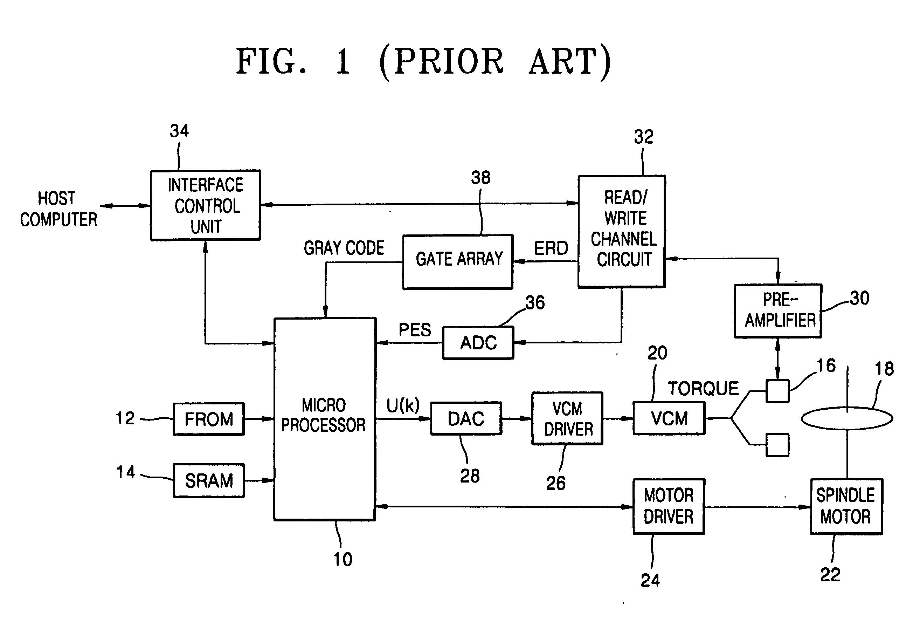

FIG. 1 is a block diagram illustrating a conventional HDD. Referring to FIG. 1, a microprocessor 10 is connected to a flash read only memory (FROM) 12 that stores predetermined control programs and data used by the microprocessor 10 and a static random access memory (SRAM) 14, to control the operation of the HDD.

A head 16 is attached to one end of an actuator and moves horizontally over the surface of a disk 18 used as a recording medium to record data on the disk 18 or read data from the disk 18. A VCM 20, which is located at the other end of the actuator to the head 16, horizontally moves the head over the disk 18 in response to the level and direction of a current applied to the VCM 20. A spindle motor 22 rotates the disk 18, which is mounted on a drive shaft, in response to a control signal input from a motor driver 24. A VCM driver 26 is connected to the VCM 20 and drives the VCM 20.

A digital-to-analog converter (DAC) 28 connected to the microprocessor 10 and the VCM driver 26 receives a digital control input signal U(k) from the microprocessor 10 and converts the digital control input signal U(k) into an analog signal. Thereafter, the DAC 28 outputs the analog signal to the VCM driver 26.

The motor driver 24 is connected to the spindle motor 22 and the microprocessor 10 and drives the spindle motor 22 according to the control of the microprocessor 10.

A pre-amplifier 30 connected to the head 16 amplifies a reproduced signal and outputs the amplified signal to a read/write channel circuit 32, and outputs an input signal to be recorded to the head 16.

The read/write channel circuit 32 and the pre-amplifier 30 receive recording data from the interface control unit 34 under the control of the microprocessor 10. After receiving recording data, the read/write channel circuit 32 encodes the received recording data and outputs the recording data to the pre-amplifier 30.

The read/write channel circuit 32 converts the reproduced analog signal input from the pre-amplifier 30 into a digital signal and outputs the digital signal as encoded read data (ERD) to a gate array 38.

An analog-to-digital converter (ADC) 36 connected to the read/write channel circuit 32 converts the received, reproduced analog servo signal into a digital signal and outputs the digital signal as a packetized elementary stream (PES) to the microprocessor 10.

The gate array 38 is connected to the read/write channel circuit 32 and receives the ERD signal. The gate array 38 detects and outputs servo information such as gray codes, which are stored in the servo region of the disk 18.

The interface control unit 34 transfers/receives data to/from an external data input device, for example, a host computer (not shown), the microprocessor 10, and the disk 18.

The HDD uses firmware for driving a circuit unit and a device unit. The firmware is stored in the FROM 12. Often a programmable ROM (PROM) is used instead of the FROM 12. However, the firmware on a PROM cannot be changed after programming, and thus a PROM device is not well-suited for the common requirement to improve the HDD by upgrading firmware. In addition, the PROM should be replaced when a fatal error occurs in the operation of the HDD.

HDD firmware can be classified into modules according to functionality. Examples of the modules include an interface module, a disk module, a test module, and a servo module. The firmware provides basic functions used to test and initialize a computer and for an operating system to interact with users and hardware devices. Firmware is typically coded in C-language or in either a binary or a hexadecimal type assembly language and is stored in the FROM 12.

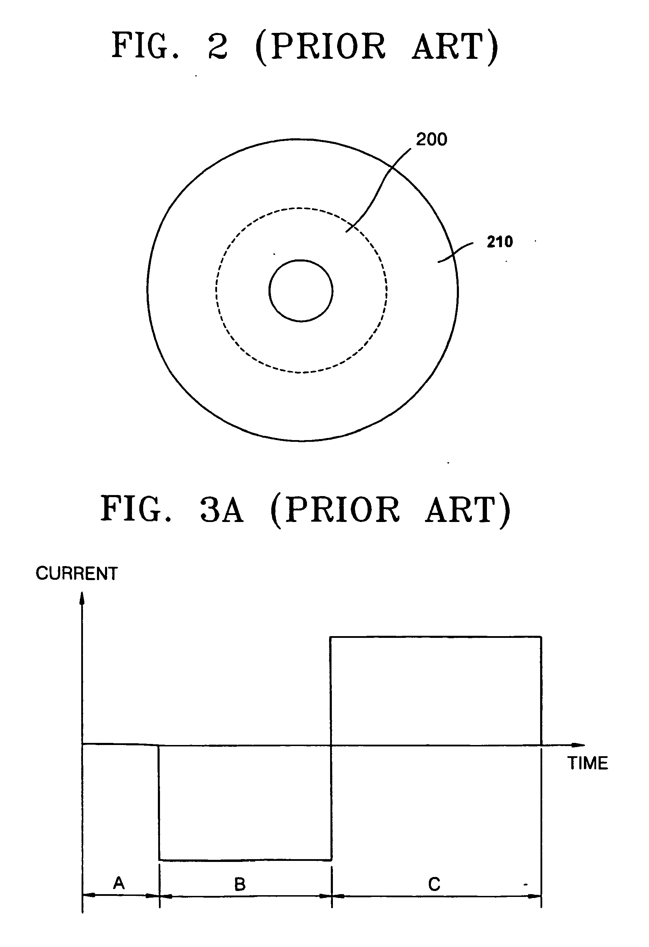

In an inactive state, the head 16 is found in the parking region 200 of the disk 18 as shown in FIG. 2. When in this region 200, an iron (not shown) located at the other end of the actuator (not shown) is attached to a magnet. The iron and the magnet serve as a latch. The condition in which the iron and the magnet are magnetically coupled or decoupled is referred to as a latch state. The magnetic force between the magnet and the iron is referred to as a latch force. In order to efficiently unlatch the head of the HDD, a current having an optimal unlatch profile is applied to the VCM 20.

On the other hand, when the HDD is in an active state, the microprocessor 10 controls the movement of the head 16 from the parking region 200 to a data region 210 of the disk 18 as shown in FIG. 2. The operation of the HDD in the active state will now be described with reference to FIG. 1. When the HDD becomes active, the microprocessor 10 controls the spindle motor 22 to rotate at a constant speed. When the rotation of the spindle motor 22 reaches the desired constant speed, the microprocessor 10 applies a rectangular wave having a predetermined size as shown in FIG. 3A to the VCM 20 via the VCM driver 26. The rectangular waveform generates torque in the VCM 20, giving rise to movement of the head 16 from the parking region 200 to the data region 210 of the disk 18. Such a process is referred to as an unlatch operation.

FIG. 2 illustrates the structure of a hard disk 18. Referring to FIG. 2, the hard disk 18 is divided into a parking region 200, an inner guard band region located at the circumference of the parking region 200, a data region 210 located outside the circumference of the inner guard band region, and an outer guard band region located at the outermost circumference of the hard disk18. In general, servo sectors and data sectors are arranged along the hard disk tracks. The servo sectors store information used for servo control, such as detecting and following tracks. The data sectors store user data. In the HDD using a multi-platter method, tracks are arranged on disks in concentric circles and track numbers are assigned to each track. The tracks on the disks having the same track number are referred to as a cylinder.

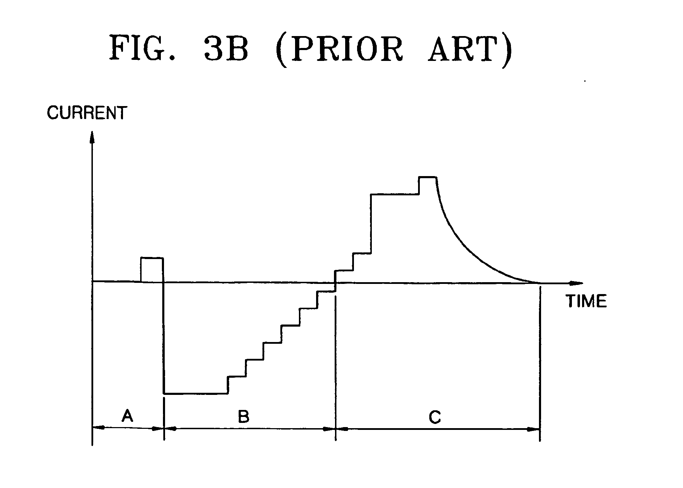

FIGS. 3A and 3B are graphs illustrating conventional waveforms of unlatch currents that are applied to the VCM 20. The graph of FIG. 3A illustrates the profile of an unlatch current approximating a rectangular wave, and the graph of FIG. 3B illustrates the profile of an unlatch current approximating a sinusoidal wave.

Referring to FIGS. 3A and 3B, the x-axis denotes time, and the y-axis denotes the current applied to the VCM 20. The x-axis is divided into section A having a parking current of 0 mA, section B (an acceleration period), and section C (a deceleration period). The y-axis is divided into a section where the current is negative and a section where the amount of current is positive. The negative current section denotes that the current is applied in an outer guard band disk (OD) direction of the hard disk, and the positive current section denotes that the current is applied in an inner guard band disk (ID) direction of the hard disk.

Referring to FIG. 3B, the parking current in section A is generally 0 mA. However, the parking current is increased to a positive level at a portion right before section B (the acceleration period) in order to easily perform an unlatch operation by using reaction of the VCM. As shown in FIG. 3B, the current is applied in the OD direction at the beginning of the unlatch operation to move the head out of the parking region. The speed of the head is reduced by applying the current in a reverse direction, i.e., the ID direction. In other words, referring to FIGS. 3A and 3B, the unlatch operation can be efficiently performed by changing the waveform of the input currents to the VCM 20 according to the characteristics of the HDD.

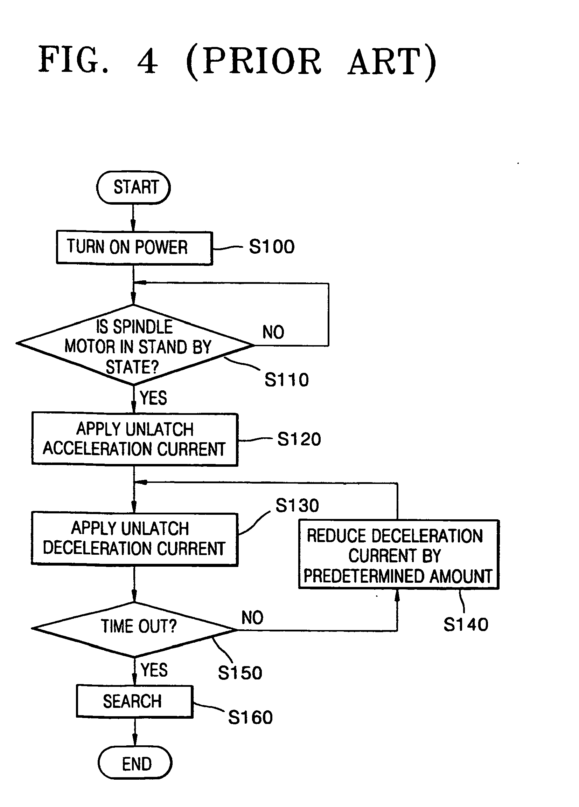

FIG. 4 is a flowchart illustrating a conventional unlatch algorithm. A conventional open loop unlatch algorithm will now be described with reference to FIGS. 1, 2, and 4.

When the power of the HDD is turned on in step S100, the spindle motor 22 of the HDD enters a standby state and is controlled by the microprocessor 10. In other words, when the HDD is turned on, the microprocessor 10 controls the spindle motor 22 and causes it to rotate at a constant speed. This is referred to as a standby state of the spindle motor 22. Before unlatching the head 16, the microprocessor 10 determines whether the spindle motor 22 is in the standby state in step S110. In step S120, the microprocessor 10 applies an unlatch acceleration current of a predetermined value for a predetermined period. It then applies an unlatch deceleration current of a predetermined value for a predetermined period in step S130. Then, in step S150, the microprocessor 10 determines whether the head 16 is in a timeout state. A timeout state occurs a predetermined amount of time after the head 16 has completed the unlatch operation. If the head 16 is not in the timeout state, the value of the deceleration current is reduced by a predetermined amount in step S140, and then step S130 is repeated. If the head 16 is In the timeout state, the microprocessor 10 performs a search operation in step S160 so that the head moves from the parking region 200 to the data region 210 of the hard disk 18.

In the conventional unlatch algorithm used in the conventional HDD, the unlatch waveform profile having either the rectangular or sinusoidal wave shape that is applied to the VCM 20 to unlatch the head from the parking region to the data region is predetermined regardless of the characteristics of the hard disk, such as the latch force of the hard disk. The predetermined unlatch profile is stored in the FROM 12. Furthermore, the unlatch operation is performed in an open loop according to the predetermined unlatch profile.

Such a method is performed under the assumption that the characteristics of various HDDs are equal; however, different HDDs have different characteristics. Accordingly, if a uniform value of unlatch current is applied to all HDDs for a uniform period, the head 16 of an HDD having a small latch force may be damaged due to a higher than desired current. On the other hand, failure to latch to the data region may occur in an HDD having the characteristic of a large latch force.

### SUMMARY OF THE INVENTION

According to an aspect of the present invention, there is provided a method of making and updating an optimal unlatch profile for a hard disk drive (HDD) having a flash ROM (FROM) for storing and updating an unlatch profile and a buffer for temporarily storing the unlatch profile. The method includes making an optimal unlatch profile for the characteristics of the HDD, and updating the unlatch profile by downloading the optimal unlatch profile to the FROM and updating the FROM, and making an unlatch profile includes receiving a feed back latch force of the HDD by performing a predetermined test on the HDD, and making the optimal unlatch profile for the characteristics of the HDD by using the measured latch force.

In another aspect of the present invention, updating the unlatch profile comprises recording and downloading the optimal unlatch profile.

In another aspect of the invention, the optimal unlatch profile is recorded on a predetermined portion of a hard disk when recording the optimal unlatch profile.

In another aspect of the present invention, downloading the optimal unlatch profile includes downloading the optimal unlatch profile from the predetermined portion of the hard disk and storing the optimal unlatch profile in the buffer, and downloading the optimal unlatch profile from the buffer to the FROM and updating the FROM.

In another aspect of the present invention, the predetermined portion of the hard disk is a maintenance cylinder or an outer guard band cylinder.

Additional aspects and/or advantages of the invention will be set forth in part In the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating a conventional hard disk drive (HDD);
FIG. 2 illustrates a parking region and a data region of a conventional HDD;
FIG 3A is a graph illustrating a conventional unlatch input current waveform to a voice coil motor (VCM);
FIG 3B is a graph illustrating another conventional unlatch input current waveform to a VCM;
FIG 4 is a flowchart illustrating a conventional unlatch algorithm;
FIG 5 is a flowchart illustrating a method of updating a flash ROM (FROM) by making an unlatch profile;
FIG 6 is a flowchart illustrating a method of making an unlatch profile according to an embodiment of the present invention: and
FIG 7 is a block diagram illustrating a hard disk drive (HDD) according to an aspect of the invention.

### DETAILED DESCRIPTION OF THE EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

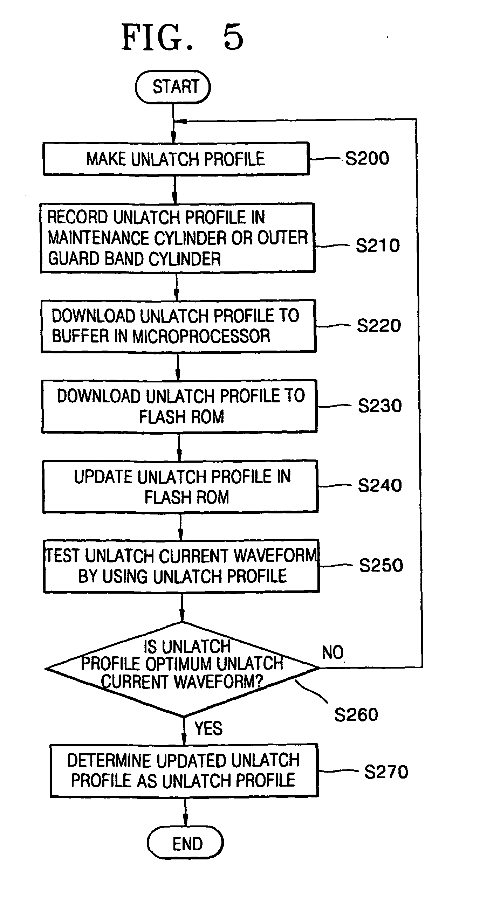

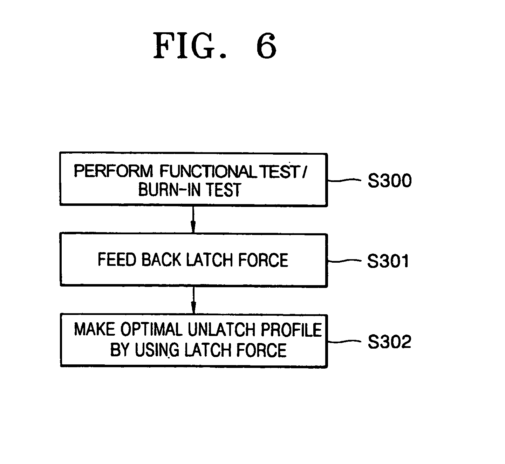

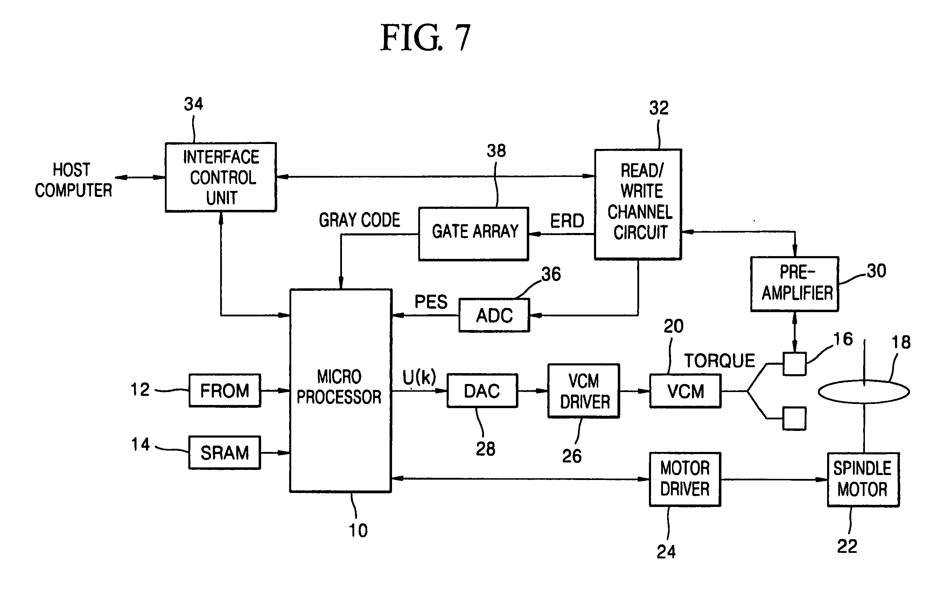

FIG. 5 is a flowchart illustrating a method of updating an optimal unlatch profile for a hard disk drive (HDD), and FIG 6 is a flowchart illustrating a method of making an optimal unlatch profile according to embodiments of the present invention. FIG. 7 is a block diagram illustrating a hard disk drive (HDD) according to an aspect of the invention.

Referring to FIG. 5, an optimal unlatch profile for the characteristics of the HDD is made in operation S200. A method of making the optimal unlatch profile Is shown in FIG. 6 according to an aspect of the present invention. Referring to FIG. 6, in operation S300, a function test or a burn-in test is performed on the HDD. Then, in operation S301, a feed back latch force of an actuator having a head at one side is received. Thereafter, an optimal unlatch profile for the HDD is made based on the feed back latch force in operation S302. The function test or the burn-in test for making the optimal profile is well known to those skilled in the art, so a description of the function test or the burn-in test will be omitted. An unlatch profile applied to a voice coil motor (VCM) includes an acceleration period, a deceleration period, and a reaction period.

In operation S210, the unlatch profile made in step S200 of FIG. 5 is stored in a maintenance cylinder (not shown) or an outer guard band cylinder (not shown). In general, the maintenance cylinder is used to exchange defective sectors with the sectors in a maintenance region in order to deal with defects on a disk However, the maintenance cylinder according to this aspect of the present invention stores the unlatch profile for unlatching the head of the hard disk.

As a host computer can generally only access a flash ROM (FROM) via a microprocessor, the unlatch profile is stored in the maintenance cylinder or the outer guard band cylinder according to an aspect of the invention. However, other storage locations could be used.

In addition, because all of the unlatch profile cannot be directly stored in the FROM, the unlatch profile is temporarily stored in the outer guard band cylinder or the maintenance cylinder of the hard disk that can be easily accessed. The maintenance cylinder or the outer guard band cylinder is also temporarily used to download the unlatch profile to the FROM. However, it is understood that the profile can be stored in other locations of the hard disk and/or stored on other media or in separate memory areas.

In operation S220, the unlatch profile is transferred from the maintenance cylinder or the outer guard band cylinder to a buffer of the microprocessor. Thereafter, in operation S230, the microprocessor downloads the unlatch profile from its buffer to the FROM. Then, in operation S240, the unlatch profile stored in the FROM is updated.

The method of programming the unlatch profile in the FROM is as follows. The unlatch profile file to be downloaded is stored in the buffer of the microprocessor via a 40-pin terminal or a serial terminal (Rx and Tx), and the existing file in the FROM is erased. Then, the file stored in the buffer is programmed and verified in the FROM.

Next, an unlatch current waveform is tested in operation S250 to determine whether the unlatch profile is an optimal unlatch current waveform, in operation S260. In operation S270, if the unlatch profile is the optimal unlatch current waveform, the updated unlatch profile is determined to be an unlatch profile. Otherwise, the process is repeated starting from operation S200 to obtain and update the optimal unlatch current waveform profile.

As described above, the method of making and updating an optimal unlatch profile for the characteristics of a HDD can perform an efficient head unlatch operation so that damage to a head can be prevented. The method of FIGS. 5 and 6 can be implemented as a computer program encoded as a computer readable medium to be used by a controller, such as the microprocessor 10 shown in FIG. 1. It is further understood that the HDD shown in FIG. 1 could be adapted to perform the method of FIGS. 5 and 6 according to an aspect of the present invention shown in FIG. 7.

Although a few embodiments of the present invention have been shown and described, it would be appreciated by those skilled in the art that changes may be made in this embodiment without departing from the principles of the claims and their equivalents.

## Claims

1. A method of making and updating an optimal unlatch profile for a hard disk drive (HDD) having a flash ROM (FROM, 12) for storing and updating an unlatch profile and a buffer for temporarily storing the unlatch profile, the method comprising:
making an optimal unlatch profile for the characteristics of the HDD; and
updating the unlatch profile by downloading the optimal unlatch profile to the FROM (12) and updating the FROM (12),
wherein the making of the optimal unlatch profile comprises:
receiving a feed back latch force of the HDD by performing a predetermined test on the HDD; and
making the optimal unlatch profile for the characteristics of the HDD using the measured latch force.

2. The method of claim 1, wherein the updating the unlatch profile comprises recording and downloading the optimal unlatch profile.

3. The method of claim 2, wherein the recording the optimal unlatch profile comprises recording optimal unlatch profile on a predetermined portion of a hard disk.

4. The method of claim 2, wherein the downloading the optimal unlatch profile comprises:
downloading the optimal unlatch profile from the predetermined portion of the hard disk and storing the optimal unlatch profile in the buffer; and
downloading the optimal unlatch profile from the buffer to the FROM and updating the FROM.

5. The method of claim 3 or 4, wherein the predetermined portion of the hard disk is a maintenance or an outer guard band cylinder.

6. A method of manufacturing a hard disk drive having an optimal unlatch profile comprising:
providing a hard disk drive having a first memory (12) for storing an unlatch profile and a controller (10) that uses the stored unlatch profile in driving a hard disk;
developing an optimal unlatch profile current waveform for the hard disk drive;
storing the optimal unlatch profile current waveform on the hard disk;
downloading the optimal unlatch profile current waveform from the hard disk to a second memory; and
transferring the optimal unlatch profile current waveform from the second memory to be stored in the first memory as the unlatch profile,
wherein the developing of the optimal unlatch profile current waveform for the hard disk drive comprises testing the hard disk drive, measuring a feed back latch force of the hard disk drive during the testing the hard disk drive, and creating the optimal unlatch profile current waveform for the hard disk drive according to the measured feed back latch force.

7. The method of claim 6, wherein the optimal unlatch profile current waveform is stored in the maintenance or in the outer guard band cylinder of the hard disk.

8. The method of claim 6, wherein second memory is a buffer memory in the controller (10), and the first memory (12) is a flash read only memory (FROM, 12).

9. A computer readable medium encoded with processing instructions for implementing the method of any one of claims 1 to 5 performed by a computer having the hard disk.

10. A hard disk drive system, comprising:
at least one data storage disk (18) that stores data;
a reading/writing head (16) which transfers the data with respect to the at least one data storage disk (18);
an actuator that causes relative movement between the reading/writing head (16) and the at least one data storage disk (18);
at least one memory (12) storing a plurality of hard disk drive commands including an optimal unlatch profile current waveform for the at least one data storage disk (18); and
a controller (10) that controls the reading/writing head (16) to transfer the data and the actuator to move the reading/writing head (16) utilizing the optical unlatch profile current waveform recalled from the at least one memory (12), develops the optimal unlatch profile current waveform for the hard disk drive, and downloads the optimal unlatch profile current waveform to the memory (12) to be recalled while controlling the actuator,
wherein the developing of the optimal unlatch profile current waveform for the at least one data storage disk (18) comprises testing the at least one data storage disk (18), measuring a feed back latch force for the actuator during the testing the hard disk drive, and creating the optimal unlatch profile current waveform for the at least one data storage disk (18) according to the measured feed back latch force.

11. The hard disk drive system as in claim 10, wherein the downloading the optimal unlatch profile current waveform includes storing the optimal unlatch profile current waveform in the maintenance cylinder of the at least one data storage disk (18), reading the optimal unlatch profile current waveform from the at least one data storage disk (18), temporarily storing the optimal unlatch profile current waveform in a buffer memory of the controller (10), and storing the buffered optimal unlatch profile current waveform in at least one memory (12) coupled to the controller of the hard disk drive system.

12. The hard disk drive system as in claim 11, wherein the memory coupled to the controller is a flash ROM.

## Patentansprüche

1. Verfahren zur Herstellung und Aktualisierung eines optimalen Entriegelungsprofils eines Festplattenlaufwerks (HDD), das einen Flash-ROM (FROM, 12) für die Speicherung und Aktualisierung eines Entriegelungsprofils sowie einen Puffer für die vorrübergehende Speicherung des Entriegelungsprofils aufweist, wobei das Verfahren folgende Schritte umfasst:
Herstellung eines optimalen Entriegelungsprofils für die Besonderheiten des HDD und
Aktualisierung des Entriegelungsprofils durch Herunterladen des optimalen Verriegelungsprofils auf den FROM (12) sowie Aktualisierung des FROM (12),
wobei die Herstellung des optimalen Entriegelungsprofils die folgenden Schritte umfasst:
Empfangen einer Rückkopplungs-Verriegelungskraft des HDD durch Ausführen eines zuvor festgelegten Tests auf dem HDD und
Herstellung des optimalen Entriegelungsprofils für die Besonderheiten des HDD unter Verwendung der gemessenen Verriegelungskraft.

2. Verfahren nach Anspruch 1, wobei die Aktualisierung des Entriegelungsprofils die Aufzeichnung und das Herunterladen des optimalen Entriegelungsprofils umfasst.

3. Verfahren nach Anspruch 2, wobei die Aufzeichnung des optimalen Entriegelungsprofils die Aufzeichnung des optimalen Entriegelungsprofils auf einem zuvor festgelegten Abschnitt einer Festplatte umfasst.

4. Verfahren nach Anspruch 2, wobei das Herunterladen des optimalen Entriegelungsprofils folgende Schritte umfasst:
Herunterladen des optimalen Entriegelungsprofils von dem zuvor festgelegten Abschnitt der Festplatte und Speicherung des optimalen Entriegelungsprofils im Puffer und
Herunterladen des optimalen Entriegelungsprofils vom Puffer auf den FROM und Aktualisierung des FROM.

5. Verfahren nach Anspruch 3 oder 4, wobei der zuvor festgelegte Abschnitt der Festplatte ein Wartungs- oder äußerer Sicherheitsbandzylinder ist.

6. Verfahren zur Herstellung eines Festplattenlaufwerks mit einem optimalen Entriegelungsprofil, das folgende Schritte umfasst:
Bereitstellung eines Festplattenlaufwerks mit einem ersten Speicher (12) für die Speicherung eines Entriegelungsprofils und einer Steuereinheit (10), die das gespeicherte Entriegelungsprofil beim Ansteuern einer Festplatte verwendet;
Entwicklung einer aktuellen Wellenform des optimalen Entriegelungsprofils für das Festplattenlaufwerk;
Speicherung der aktuellen Wellenform des optimalen Entriegelungsprofils auf der Festplatte;
Herunterladen der aktuellen Wellenform des optimalen Entriegelungsprofils von der Festplatte auf einen zweiten Speicher und
Übertragung der aktuellen Wellenform des optimalen Entriegelungsprofils vom zweiten Speicher zur Speicherung auf dem ersten Speicher als Entriegelungsprofil,
wobei die Entwicklung der aktuellen Wellenform des optimalen Entriegelungsprofils für das Festplattenlaufwerk die Erprobung des Festplattenlaufwerks, Messung einer Rückkopplungs-Verriegelungskraft des Festplattenlaufwerks während der Erprobung des Festplattenlaufwerks und die Erstellung der aktuellen Wellenform des optimalen Entriegelungsprofils für das Festplattenlaufwerk entsprechend der gemessenen Rückkopplungs-Verriegelungskraft umfasst.

7. Verfahren nach Anspruch 6, wobei die aktuelle Wellenform des optimalen Entriegelungsprofils im Wartungs- oder äußeren Sicherheitsbandzylinder der Festplatte gespeichert wird.

8. Verfahren nach Anspruch 6, wobei der zweite Speicher ein Pufferspeicher in der Steuereinheit (10) ist, und der erste Speicher (12) ist ein Flash-Nur-Lese-Speicher (FROM, 12).

9. Ein vom Computer lesbares Medium, das mit den Verarbeitungsanweisungen für die Umsetzung des Verfahrens nach einem der Ansprüche 1 bis 5, das von einem Computer mit einer Festplatte ausgeführt wird, kodiert ist.

10. System eines Festplattenlaufwerks, das Folgendes umfasst:
mindestens eine Datenspeicherplatte (18), die Daten speichert;
einen Lese-/Schreibkopf (16), der die Daten im Hinblick auf die mindestens eine Datenspeicherplatte (18) überträgt;
einen Aktuator, der eine relative Bewegung zwischen dem Lese-/Schreibkopf (16) und der mindestens einen Datenspeicherplatte (18) bewirkt;
mindestens einen Speicher (12), der eine Vielzahl von Festplattenbefehlen speichert, einschließlich einer aktuellen Wellenform des optimalen Entriegelungsprofils für die mindestens eine Datenspeicherplatte (18), und
eine Steuereinheit (10), die den Lese-/Schreibkopf (16) bei der Übertragung der Daten sowie den Aktuator bei der Bewegung des Lese-/Schreibkopfes (16) unter Verwendung des aktuellen Wellenform des optimalen Entriegelungsprofils, die von dem mindestens einen Speicher (12) abgerufen wird, steuert, die die aktuelle Wellenform des optimalen Entriegelungsprofils für das Festplattenlaufwerk entwickelt und die aktuelle Wellenform des optimalen Entriegelungsprofils auf den Speicher (12) herunterlädt, so dass diese bei der Steuerung des Aktuators abgerufen werden kann,
wobei die Entwicklung der aktuellen Wellenform des optimalen Entriegelungsprofils für die mindestens eine Datenspeicherplatte (18) die Erprobung der mindestens einen Datenspeicherplatte (18), Messung einer Rückkopplungs-Verriegelungskraft für den Aktuator während der Erprobung des Festplattenlaufwerks und die Erstellung der aktuellen Wellenform des optimalen Entriegelungsprofils für die mindestens eine Datenspeicherplatte (18) entsprechend der gemessenen Rückkopplungs-Verriegelungskraft umfasst.

11. System eines Festplattenlaufwerks nach Anspruch 10, wobei das Herunterladen der aktuellen Wellenform des optimalen Entriegelungsprofils das Speichern der aktuellen Wellenform des optimalen Entriegelungsprofils im Wartungszylinder der mindestens einen Datenspeicherplatte (18), das Lesen der aktuellen Wellenform des optimalen Entriegelungsprofils von der mindestens einen Datenspeicherplatte (18), die vorübergehende Speicherung der aktuellen Wellenform des optimalen Entriegelungsprofils in einem Pufferspeicher der Steuereinheit (10) und die Speicherung der gepufferten aktuellen Wellenform des optimalen Entriegelungsprofils in mindestens einem Speicher (12), der mit der Steuereinheit des Systems des Festplattenlaufwerks gekoppelt ist, umfasst.

12. System eines Festplattenlaufwerks nach Anspruch 11, wobei der mit der Steuereinheit gekoppelte Speicher ein Flash-ROM ist.

## Revendications

1. Procédé de réalisation et de mise à jour d'un profil optimal de déverrouillage pour un disque dur (HDD) ayant une MEM flash (FROM - Flash ROM, 12) destinée à mémoriser et à mettre à jour un profil de déverrouillage et un tampon destiné à mémoriser temporairement le profil de déverrouillage, le procédé comprenant :
la réalisation d'un profil optimal de déverrouillage pour les caractéristiques du disque dur ; et
la mise à jour du profil de déverrouillage en téléchargeant le profil optimal de déverrouillage dans la MEM flash (12) et en mettant la MEM flash (12) à jour.
dans lequel la réalisation du profil optimal de déverrouillage comprend :
la réception d'une force de verrouillage de retour du disque dur en effectuant un essai prédéterminé sur le disque dur ; et
la réalisation du profil optimal de déverrouillage pour les caractéristiques du disque dur à l'aide de la force de verrouillage mesurée.

2. Procédé selon la revendication 1, dans lequel la mise à jour du profil de déverrouillage comprend l'enregistrement et le téléchargement du profil optimal de déverrouillage.

3. Procédé selon la revendication 2, dans lequel l'enregistrement du profil optimal de déverrouillage comprend l'enregistrement du profil optimal de déverrouillage sur une partie prédéterminée d'un disque dur.

4. Procédé selon la revendication 2, dans lequel le téléchargement du profil optimal de déverrouillage comprend :
le téléchargement du profil optimal de déverrouillage de la partie prédéterminée du disque dur et la mémorisation du profil optimal de déverrouillage dans le tampon ; et
le téléchargement du profil optimal de déverrouillage du tampon dans la MEM flash et la mise à jour de la MEM flash.

5. Procédé selon les revendications 3 ou 4, dans lequel la partie prédéterminée du disque dur est un maintien ou un cylindre à bande de protection externe.

6. Procédé de fabrication d'un disque dur ayant un profil optimal de déverrouillage comprenant :
la provision d'un disque dur ayant tune première mémoire (12) destinée à mémoriser un profil de déverrouillage et un contrôleur (10) qui utilise le profil de déverrouillage mémorisé en entraînant un disque dur ;
le développement d'une forme d'onde courante de profil optimal de déverrouillage destinée au disque dur ;
la mémorisation de la forme d'onde courante du profil optimal de déverrouillage sur le disque dur ;
le téléchargement de la forme d'onde courante du profil optimal de déverrouillage du disque dur dans une seconde mémoire ; et
le transfert de la forme d'onde courante du profil optimal de déverrouillage de la seconde mémoire à mémoriser dans la première mémoire comme profil de déverrouillage,
dans lequel le développement de la forme d'onde courante du profil optimal de déverrouillage destinée au disque dur comprend l'essai du disque dur , la mesure d'une force de verrouillage de retour du disque dur pendant l'essai du disque dur, et la création de la forme d'onde courante du profil optimal de déverrouillage destinée au disque dur selon la force de verrouillage de retour mesurée.

7. Procédé selon la revendication 6, dans lequel l'onde de forme courante du profil optimal de déverrouillage est mémorisée dans le maintien ou dans le cylindre à bande de protection extérieure du disque dur.

8. Procédé selon la revendication 6, dans lequel une seconde mémoire est une mémoire tampon dans le contrôleur (10), et la première mémoire (12) est une mémoire morte flash (MEM flash, 12).

9. Support informatique lisible encodé de consignes de traitement destinées à mettre en oeuvre le procédé selon l'une quelconque des revendications 1 à 5 réalisées par un ordinateur ayant le disque dur.

10. Système de disque dur, comprenant :
au moins un disque de mémorisation de données (18) qui mémorise des données ;
une tête de lecture/écriture (16) qui transfère les données concernant au moins un disque de mémorisation des données (18) ;
un actionneur qui provoque un déplacement relatif entre la tête de lecture/écriture (16) et au moins le disque de mémorisation des données (18) ;
au moins une mémoire (12) mémorisant une pluralité de commandes du disque dur dont une forme d'onde courant du profil optimal de déverrouillage destinée au moins au disque de mémorisation des données (18) ; et
un contrôleur (10) qui contrôle la tête de lecture/écriture (16) pour transférer les données et l'actionneur pour déplacer la tête de lecture/écriture (16) utilisant l'onde de forme courante du profil optimal de déverrouillage rappelée d'au moins une mémoire (12), développe l'onde de forme courante du profil optimal de déverrouillage destinée au disque dur, et télécharge l'onde de forme courante du profil optimal de déverrouillage dans la mémoire (12) à rappeler tout en contrôlant l'actionneur,
dans lequel le développement de l'onde de forme courante du profil optimal de déverrouillage destinée au moins au disque de mémorisation des données (18) comprend l'essai d'au moins le disque de mémorisation des données (18), la mesure d'une force de verrouillage de retour destinée à l'actionneur pendant l'essai du disque dur, et la création de l'onde de forme courante du profil optimal de déverrouillage destinée au moins au disque de mémorisation des données (18) selon la force de verrouillage de retour mesurée.

11. Système de disque dur selon la revendication 10, dans lequel le téléchargement de l'onde de forme courante du profil optimal de déverrouillage comprend la mémorisation de l'onde de forme courante du profil optimal de déverrouillage dans le cylindre de maintien d'au moins le disque de mémorisation des données (18), la lecture de l'onde de forme courante du profil optimal de déverrouillage à partir au moins du disque de mémorisation des données (18), la mémorisation à titre temporaire de l'onde de forme courante du profil optimal de déverrouillage dans la mémoire tampon du contrôleur (10), et la mémorisation de l'onde de forme courante du profil optimal de déverrouillage tamponnée dans au moins une mémoire (12) couplée au contrôleur du système de disque dur.

12. Système de disque dur selon la revendication 11 dans lequel la mémoire couplée au contrôleur est une MEM flash.
